# EUROPEAN PATENT APPLICATION

(11) **EP 4 644 108 A1**
(43) Date of publication of application: **05.11.2025**
(21) Application number: 23912144.5
(22) Date of filing: 26.12.2023
(51) Int. Cl.: B32B 1/08, B32B 29/00

(54) **PAPER TUBE, LAYERED BODY FOR PAPER TUBE MANUFACTURING, AND METHOD FOR MANUFACTURING PAPER TUBE**

(30) Priority: 26.12.2022 JP 2022208326
(71) Applicant: Toppan Holdings Inc., Tokyo 110-0016 (JP)
(72) Inventor: SAITOU Kyouhei, Tokyo 110-0016 (JP); OGASAWARA Motoyuki, Tokyo 110-0016 (JP)
(74) Representative: TBK
(86) International application number: PCT/JP2023/046671
(87) International publication number: WO 2024/143365

(57) **Abstract**

The present invention provides a paper tube including a pattern layer on a surface of the paper tube to impart design so that the paper tube can be widely used as a component of interior materials and furniture materials, a laminate for use in production of the paper tube, and a method for producing the paper tube. A paper tube according to the present embodiment includes a pattern layer (3) on at least one side of an inorganic paper laminate (10) formed of a plurality of layers of inorganic paper (1) bonded together.

## Description

### [Technical Field]

The present invention relates to paper tubes used for interior materials, furniture materials, and the like, laminates for use in production of the paper tubes, and methods for producing the paper tubes.

### [Background Art]

Paper tubes formed by laminating inorganic paper are noncombustible, lightweight, and can be made to have a specific strength. Therefore, the paper tubes can be suitably used as components of interior materials, such as partitions, ceiling materials, floor materials and door materials, and furniture materials.

For example, PTL 1 discloses that a paper tube formed by laminating noncombustible magnesium silicate mixed paper in the form of paper tube can be used as an interior material.

### [Citation List]

### [Patent Literature]

### [Summary of Invention]

### [Technical Problem]

Conventional paper tubes have no design on the surface, which limits their applications.

The present invention has been made in view of the above problem, and aims to provide a paper tube including a pattern layer on a surface of the paper tube to impart design so that the paper tube can be widely used as a component of interior materials and furniture materials, a laminate for use in production of the paper tube, and a method for producing the paper tube.

### [Solution to Problem]

An aspect of the present invention for solving the above problem is a paper tube including a pattern layer on at least one side of an inorganic paper laminate formed of a plurality of sheets of inorganic paper bonded together.

### [Advantageous Effects of Invention]

According to an aspect of the present invention, by providing a pattern layer to impart designs such as plain, wood grain and abstract patterns to a surface of a paper tube, it can be used as a component of interior materials such as partitions, ceiling materials, floor materials and door materials in facilities such as indoor offices, indoor stadiums, gymnasiums, indoor swimming pools, event halls, public halls, ceremony halls, station lobbies, airport lobbies and shopping mall atriums, together with wooden, plastic and metal ceiling, floor and door materials.

In addition, when used as a component of furniture, the range of applicable furniture can be expanded due to designs being imparted.

Thus, according to an aspect of the present invention, it is possible to provide a paper tube including a pattern layer on a surface of the paper tube to impart design so that the paper tube can be widely used as a component of interior materials and furniture materials, a laminate for use in production of the paper tube, and a method for producing the paper tube.

### [Brief Description of Drawings]

Fig. 1 is a schematic diagram illustrating a cross-section of a laminate (laminate for producing a paper tube) with a decorative sheet laminated on a surface as a pattern layer, which constitutes a paper tube according to an embodiment of the present invention.
Fig. 2 is a schematic diagram illustrating a cross-section of a laminate (laminate for producing a paper tube) with a pattern directly printed on a surface as a pattern layer, which constitutes a paper tube according to an embodiment of the present invention.

### [Description of Embodiments]

With reference to the drawings, an embodiment of the present invention will be described.

The drawings are schematic, and the relationship between the thickness and the horizontal dimension, the thickness ratio between each layer, and the like differ from actual values. The embodiment described below is merely an example configuration for embodying the technical idea of the present invention, and the technical idea of the present invention does not limit the materials, shapes, structures, and the like of the components to those described below. The technical idea of the present invention may be altered in various manners within the scope of the claims.

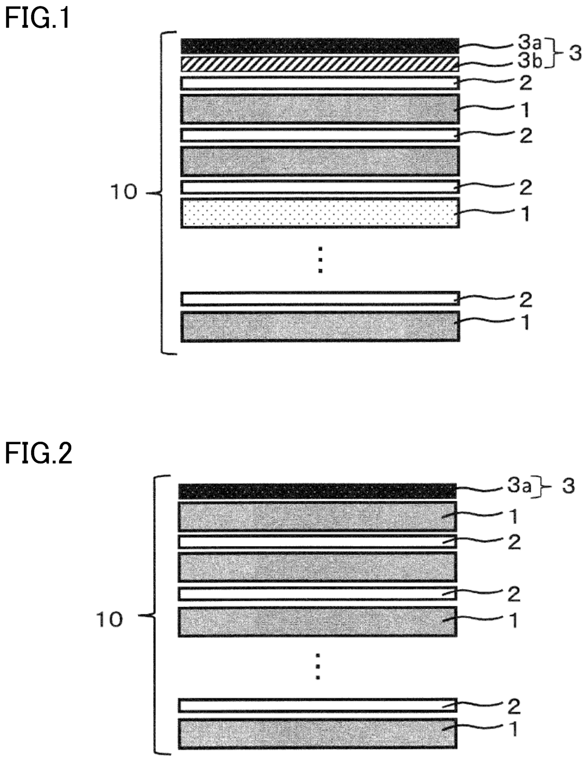

As shown in Figs. 1 and 2, a laminate that constitutes a paper tube of the present embodiment may be produced by, for example, laminating a plurality of sheets of inorganic paper via an adhesive layer. In addition, a pattern layer is provided on at least one side of the laminate.

A method for producing a paper tube is not specifically limited, and known production methods may be used. For example, as described in JP S63-249637 A, inorganic paper may be spirally wound around a core material to form a laminate, or as described in JP H7-285184 A, paper may be sequentially wound around a core material.

The cross-sectional shape of the paper tube is preferably circular or rectangular, but is not limited thereto.

The following description will be given of the configurations of inorganic paper 1, an adhesive layer 2 and a pattern layer 3 included in a laminate (laminate for producing a paper tube) 10 that constitutes a paper tube of the present embodiment.

### (Inorganic Paper 1)

A paper tube is produced using the inorganic paper 1.

The inorganic paper 1 may contain an inorganic material, composed of inorganic fibers and inorganic powder, for example, in an amount of preferably 60 mass% or greater, more preferably 70 mass% or greater, and even more preferably 75 mass% or greater of the entire inorganic paper 1, and other components such as pulp fibers and organic binders.

Examples of the inorganic fibers include glass fibers and carbon fibers. Examples of the inorganic powder include magnesium silicate, aluminum hydroxide and calcium carbonate.

The inorganic powder may be contained in an amount of, for example, 60 mass% or greater and 95 mass% or less of the total inorganic materials. A preferred example of the inorganic powder is magnesium silicate. Magnesium silicate is preferred since it is a non-asbestos natural mineral, is used in food additives, and is safe.

The thickness of the inorganic paper 1 per layer may preferably be within the range of, for example, 0.25 mm or greater and 0.90 mm or less, and more preferably within the range of 0.30 mm or greater and 0.80 mm or less.

Using an inorganic paper 1 with a thickness of 0.30 mm or greater and 0.80 mm or less per layer can reduce the number of layers and suppress the amount of the adhesive applied, producing a product with sufficient compressive strength and processability while ensuring combustion resistance.

Inorganic paper 1 with a thickness of less than 0.30 mm per layer is inferior in strength, and inorganic paper 1 with a thickness exceeding 0.80 mm per layer cannot withstand the stress applied during processing and may break without being bent.

The number of layers of the inorganic paper 1 is not specifically limited, but is preferably 2 or more and 4 or less. If the number of layers is only one, the paper tube may not be able to withstand the rotation of the saw blade used to cut the paper tube when adjusting the length at the installation site, and the shape of the paper tube may be deformed. In addition, in high temperature and high humidity environments, the paper tube may be deformed and damaged.

If the number of layers is 5 or more, the amount of adhesive required to bond the layers of the inorganic paper 1 to each other increases, and the amount of heat generated accordingly increases, which may result in poor combustion resistance.

Further, the mass of the inorganic paper 1 may preferably be within the range of, for example, 250 g/m² or greater and 550 g/m² or less, and more preferably within the range of 300 g/m² or greater and 500 g/m² or less. The mass of the inorganic paper 1 within the above range can impart fire resistance to the inorganic paper 1. The mass of the inorganic paper 1 of 250 g/m² or greater allows the thickness of the inorganic paper 1 to be 0.25 mm or greater, facilitating handling of the inorganic paper 1 and the paper tube when producing and installing the paper tube. Furthermore, the mass of the inorganic paper 1 of 550 g/m² or less allows the thickness of the inorganic paper 1 to be 0.90 mm or less, facilitating handling of the inorganic paper 1 and the paper tube when producing and installing the paper tube.

### (Adhesive Layer 2)

An adhesive that bonds the layers of the inorganic paper 1 together and bonds the pattern layer 3 to the inorganic paper 1 is preferably a thermoplastic elastomer, and for example, an adhesive containing an ethylene-vinyl acetate copolymer or a polyurethane-based resin is preferably used. An adhesive containing an ethylene-vinyl acetate copolymer or a polyurethane-based resin can improve the adhesion and flexibility of the adhesive layer 2 after curing. The higher the adhesion and flexibility of the adhesive layer 2, the easier it is to maintain the shape of the paper tube.

Further, when an ethylene-vinyl acetate copolymer is used, it is preferred to use an adhesive with a kinetic viscosity of 3,000 mPa·s or greater in order to prevent the adhesive from infiltrating into the inorganic paper 1 and prevent a decrease in adhesion between layers of the inorganic paper 1. When a polyurethane-based resin is used, it is preferred to use an adhesive with a kinetic viscosity of 3,000 mPa·s or greater. The kinetic viscosity of the adhesive is measured in accordance with the method specified in JIS K 7233-1986. The amount of the adhesive applied, after the solvent is completely evaporated, is preferably within the range of 10.0 g/m² or greater and 30.0 g/m² or less, and more preferably within the range of 16.0 g/m² or greater and 25.0 g/m² or less.

In particular, when an ethylene-vinyl acetate copolymer is used as the adhesive having a kinetic viscosity, measured in accordance with the method specified in JIS K 7233-1986, within the range of 5,000 mPa·s or greater and 18,000 mPa·s or less, or when a polyurethane-based resin is used as the adhesive having a kinetic viscosity, measured in accordance with the method specified in JIS K 7233-1986, within the range of 3,000 mPa·s or greater and 7,200 mPa·s or less, infiltration of the adhesive into the inorganic paper 1 can be suppressed to some extent. This is preferred since the adhesive remains on the inorganic paper 1, and high adhesion can be achieved.

### (Pattern Layer 3)

As shown in Fig. 1, the pattern layer 3 can be provided by bonding a decorative sheet or coated paper, in which an ink layer 3a is provided on a substrate 3b made of paper or resin, to a surface of the inorganic paper 1. The substrate 3b is not specifically limited, and examples thereof include paper substrates and resin substrates such as polyolefin resin films and polyester resin films. In order to reduce environmental impact, not only substrates made of non-recycled resins, but also resin substrates made of recycled resins can be used as the resin substrate.

Further, the substrate 3b may be made from recycled disposable diapers. The resin substrate made from recycled disposable diapers contains a pulp component, and the content of the pulp component is 0.1 parts by mass or greater relative to 100 parts by mass of the resin. The use of the resin substrate made from recycled disposable diapers can reduce environmental impact.

Further, as shown in Fig. 2, the pattern layer 3 can also be provided by printing the ink layer 3a directly on a surface of the inorganic paper 1. The printing method is not specifically limited, and common printing methods such as gravure printing, offset printing, screen printing, flexographic printing and inkjet printing can be used.

The above-mentioned decorative sheet or coated paper may include a top coat layer on the ink layer 3a.

The amount of the ink layer 3a applied is not specifically limited, but when the ink layer 3a is provided by gravure printing or the like, and, for example, when the amount of the ink layer 3a applied is 22 g/m² or less, the amount of organic components contained in the ink layer 3a relatively decreases, improving the combustion resistance.

Also, when the ink layer 3a is provided by inkjet printing, and, for example, when the amount of the ink layer 3a applied is 27 g/m² or less, the amount of organic components contained in the ink layer 3a relatively decreases, improving the combustion resistance.

### (Overall Configuration of Laminate for Producing Paper Tube 10)

The thickness (total thickness) of the entire laminate 10 for producing a paper tube may preferably be within the range of, for example, 0.85 mm or greater and 2.8 mm or less, and more preferably within the range of 1.9 mm or greater and 2.3 mm or less. The thickness within the above range can maintain the strength of the paper tube formed of the laminate 10 while ensuring combustion resistance.

Further, the mass of the entire laminate 10 may preferably be within the range of, for example, 1,540 g/m² or less, and more preferably within the range of 1,535 g/m² or less. The mass within the above range can provide a paper tube with high strength while ensuring combustion resistance and ease of installation.

### [Examples]

The present invention will be more specifically described by way of examples. However, the present invention is not limited to the examples described below. The present invention is limited by the claims.

### <Example 1>

First, inorganic paper was prepared which was composed of 80 mass% of magnesium silicate as an inorganic powder, 5 mass% of glass fibers as inorganic fibers, and pulp fibers and organic binders as other components. As the inorganic paper, those with thicknesses of 0.49 mm and 0.62 mm per layer were used.

Then, sheets of the inorganic paper were laminated and bonded together with an adhesive. The adhesive used contained an ethylene-vinyl acetate copolymer as a main component, and had a kinetic viscosity of 10,000 mPa·s. The adhesive was applied so that the amount of the adhesive applied was 18 g/m² with the solvent completely evaporated.

Finally, on top of the laminate of inorganic paper bonded together with the above adhesive, inorganic paper laminated in advance with coated paper including an ink layer on the surface with the above adhesive was laminated to form a four-layer laminate.

With this procedure, a sample of Example 1 was prepared.

### <Example 2>

In Example 2, a pattern layer was provided by printing a UV-curable ink made of acrylic resin directly on a surface of noncombustible paper. Other than that, the same materials and configuration as in Example 1 were used to prepare a sample of Example 2.

### <Example 3>

In Example 3, the number of layers of the inorganic paper was set to 2. Other than that, the same materials and configuration as in Example 1 were used to prepare a sample of Example 3.

### <Example 4>

Example 4 used the inorganic paper with thicknesses of 0.32 mm and 0.49 mm. The 0.32 mm-thick inorganic paper sheets were bonded together to prepare 2 sets of laminates in advance, and the laminates were further bonded together to form a four-layer laminate. On top of the laminate of inorganic paper bonded together with the above adhesive, inorganic paper laminated in advance with coated paper including an ink layer on the surface with the above adhesive was laminated to form a five-layer laminate.

With this procedure, a sample of Example 4 was prepared.

Examples 5 to 16 below differ in the kinetic viscosity of the adhesive. Samples of Examples 5 to 16 were prepared using the same materials and configuration as in Example 1, except for the kinetic viscosity of the adhesive.

### <Example 5>

An adhesive made of an ethylene-vinyl acetate copolymer and having a kinetic viscosity of 3,000 mPa·s was used as the adhesive that bonds the inorganic paper together and bonds the coated paper to the inorganic paper. Thus, a sample of Example 5 was prepared.

### <Example 6>

An adhesive made of an ethylene-vinyl acetate copolymer and having a kinetic viscosity of 5,000 mPa·s was used as the adhesive that bonds the inorganic paper together and bonds the coated paper to the inorganic paper. Thus, a sample of Example 6 was prepared.

### <Example 7>

An adhesive made of an ethylene-vinyl acetate copolymer and having a kinetic viscosity of 7,000 mPa·s was used as the adhesive that bonds the inorganic paper together and bonds the coated paper to the inorganic paper. Thus, a sample of Example 7 was prepared.

### <Example 8>

An adhesive made of an ethylene-vinyl acetate copolymer and having a kinetic viscosity of 9,000 mPa·s was used as the adhesive that bonds the inorganic paper together and bonds the coated paper to the inorganic paper. Thus, a sample of Example 8 was prepared.

### <Example 9>

An adhesive made of an ethylene-vinyl acetate copolymer and having a kinetic viscosity of 11,000 mPa·s was used as the adhesive that bonds the inorganic paper together and bonds the coated paper to the inorganic paper. Thus, a sample of Example 9 was prepared.

### <Example 10>

An adhesive made of an ethylene-vinyl acetate copolymer and having a kinetic viscosity of 13,000 mPa·s was used as the adhesive that bonds the inorganic paper together and bonds the coated paper to the inorganic paper. Thus, a sample of Example 10 was prepared.

### <Example 11>

An adhesive made of an ethylene-vinyl acetate copolymer and having a kinetic viscosity of 15,000 mPa·s was used as the adhesive that bonds the inorganic paper together and bonds the coated paper to the inorganic paper. Thus, a sample of Example 11 was prepared.

### <Example 12>

An adhesive made of an ethylene-vinyl acetate copolymer and having a kinetic viscosity of 17,000 mPa·s was used as the adhesive that bonds the inorganic paper together and bonds the coated paper to the inorganic paper. Thus, a sample of Example 12 was prepared.

### <Example 13>

An adhesive made of an ethylene-vinyl acetate copolymer and having a kinetic viscosity of 18,000 mPa·s was used as the adhesive that bonds the inorganic paper together and bonds the coated paper to the inorganic paper. Thus, a sample of Example 13 was prepared.

### <Example 14>

An adhesive made of an ethylene-vinyl acetate copolymer and having a kinetic viscosity of 20,000 mPa·s was used as the adhesive that bonds the inorganic paper together and bonds the coated paper to the inorganic paper. Thus, a sample of Example 14 was prepared.

### <Example 15>

Sheets of the inorganic paper were bonded together with an adhesive made of an ethylene-vinyl acetate copolymer and having a kinetic viscosity of Example 1. Further, the coated paper was bonded to the inorganic paper with the above adhesive. These two laminates were bonded together with an adhesive made of a polyurethane resin and having a kinetic viscosity of 7,200 mPa·s. Thus, a sample of Example 15 was prepared. The amount of the applied adhesive made of a polyurethane resin was 25 g/m².

### <Example 16>

Sheets of the inorganic paper were bonded together with an adhesive made of a polyurethane-based resin and having 7,200 mPa·s used in Example 15. The amount of the applied adhesive made of a polyurethane resin was 25 g/m². Finally, on top of the laminate of inorganic paper bonded together with the above adhesive made of a polyurethane resin, inorganic paper laminated in advance with coated paper including an ink layer on the surface with the above adhesive made of a polyurethane resin was laminated to form a four-layer laminate. The amount of each application of the adhesive made of a polyurethane resin was 25 g/m². Thus, a sample of Example 16 was prepared.

### <Example 17>

An adhesive made of a polyurethane-based resin and having a kinetic viscosity of 10,000 mPa·s was used as the adhesive that bonds the inorganic paper together and bonds the coated paper to the inorganic paper. Other than that, the same method as in Example 1 was used to prepare a sample of Example 17.

### <Example 18>

A sample of Example 18 was prepared in the same manner as in Example 1, except that the thickness of the inorganic paper was set to 0.25 mm.

### <Example 19>

A sample of Example 19 was prepared in the same manner as in Example 1, except that the thickness of the inorganic paper was set to 0.30 mm.

### <Example 20>

A sample of Example 20 was prepared in the same manner as in Example 1, except that the thickness of the inorganic paper was set to 0.80 mm.

### <Example 21>

A sample of Example 21 was prepared in the same manner as in Example 1, except that the thickness of the inorganic paper was set to 0.90 mm.

### <Example 22>

A sample of Example 22 was prepared in the same manner as in Example 1, except that the total thickness was set to 1.8 mm.

### <Example 23>

A sample of Example 23 was prepared in the same manner as in Example 1, except that the total thickness was set to 2.3 mm.

### <Example 24>

A sample of Example 24 was prepared in the same manner as in Example 1, except that an adhesive made of an ethylene-vinyl acetate copolymer and having a kinetic viscosity of 2,500 mPa·s was used as the adhesive that bonds the inorganic paper together and bonds the coated paper to the inorganic paper.

### <Example 25>

A sample of Example 25 was prepared in the same manner as in Example 1, except that an adhesive made of polyurethane and having a kinetic viscosity of 2,500 mPa·s was used as the adhesive that bonds the inorganic paper together and bonds the coated paper to the inorganic paper.

### <Example 26>

A sample of Example 26 was prepared in the same manner as in Example 1, except that an adhesive made of polyurethane and having a kinetic viscosity of 3,000 mPa·s was used as the adhesive that bonds the inorganic paper together and bonds the coated paper to the inorganic paper.

### <Example 27>

A sample of Example 27 was prepared in the same manner as in Example 1, except that an adhesive made of polyurethane and having a kinetic viscosity of 8,000 mPa·s was used as the adhesive that bonds the inorganic paper together and bonds the coated paper to the inorganic paper.

### <Comparative Example 1>

A sample was prepared in which no pattern layer was provided on a surface of the inorganic paper. Other than that, the same materials and configuration as in Example 1 were used to prepare a sample of Comparative example 1.

Table 1 shows the layer configuration of the samples in Examples 1 to 27 and Comparative example 1.

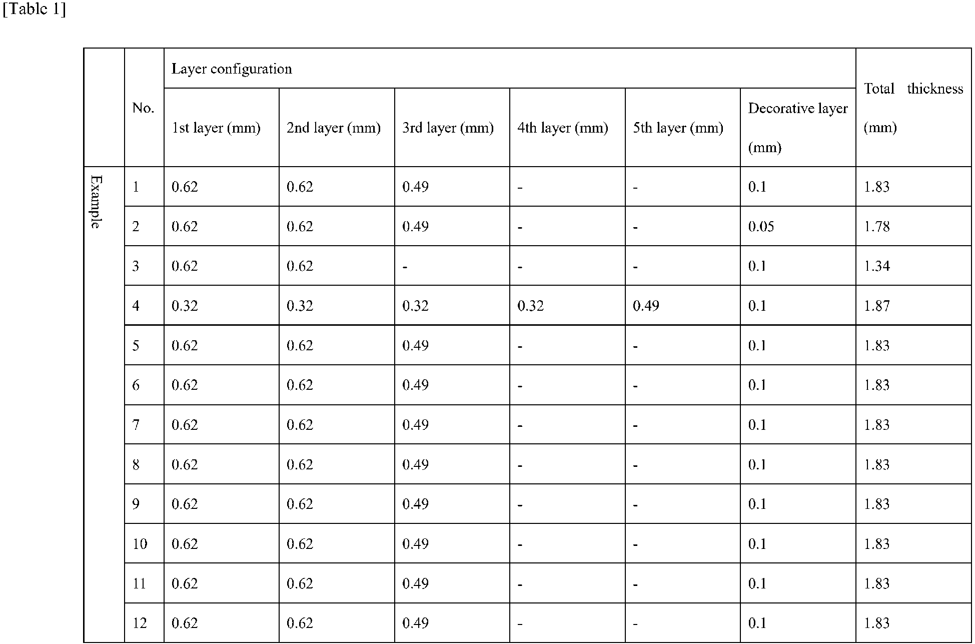

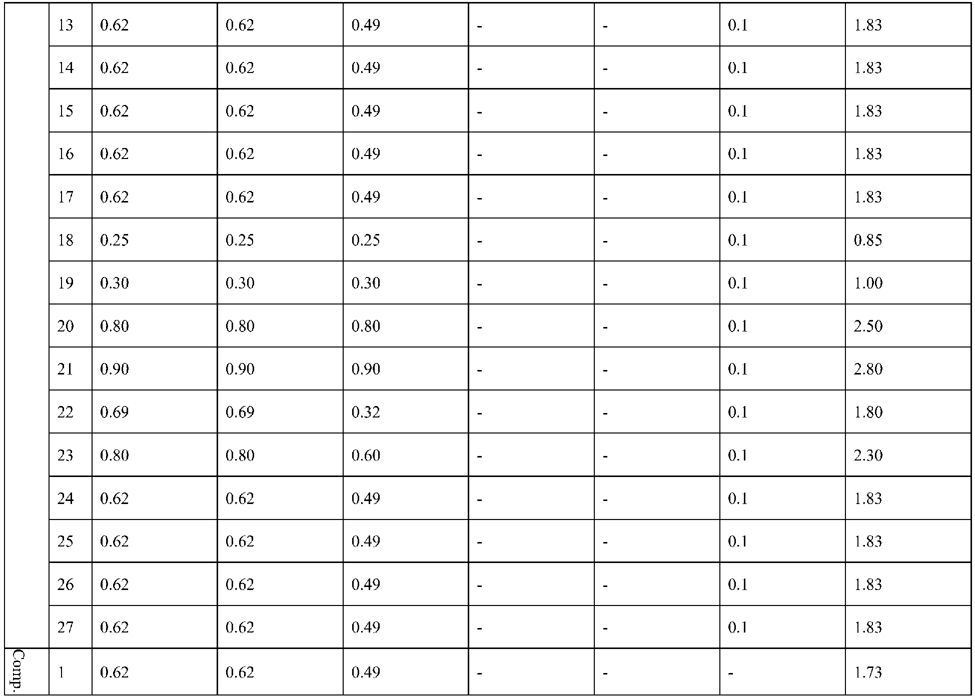

Samples of Examples 28 to 41 and Comparative example 2 were prepared in which the layers had uniform thickness.

### <Example 28>

First, inorganic paper was prepared which was composed of 80 mass% of magnesium silicate as an inorganic powder, 5 mass% of glass fibers as inorganic fibers, and pulp fibers and organic binders as other components. The inorganic paper had a thickness of 0.40 mm per layer.

Then, sheets of the inorganic paper were laminated and bonded together with an adhesive. The adhesive used contained an ethylene-vinyl acetate copolymer as a main component, and had a kinetic viscosity of 10,000 mPa·s. The adhesive was applied so that the amount of the adhesive applied was 18 g/m² with the solvent completely evaporated.

Finally, a four-layer laminate of the inorganic paper was laminated with coated paper including an ink layer with the above adhesive.

With this procedure, a sample of Example 28 was prepared.

### <Example 29>

In Example 29, a pattern layer was provided by printing a UV-curable ink directly on a surface of noncombustible paper. Other than that, the same method as in Example 28 was used to prepare a sample of Example 29.

### <Example 30>

In Example 30, the number of layers of the inorganic paper was set to 3. Other than that, the same method as in Example 28 was used to prepare a sample of Example 30.

### <Example 31>

In Example 31, the thickness of the inorganic paper was set to 0.30 mm and the number of layers of the inorganic paper was set to 5. Other than that, the same method as in Example 28 was used to prepare a sample of Example 31.

Examples 32 to 41 below differ in the kinetic viscosity of the adhesive. Samples of Examples 32 to 41 were prepared in the same manner as in Example 28, except for the kinetic viscosity of the adhesive.

### <Example 32>

An adhesive made of an ethylene-vinyl acetate copolymer and having a kinetic viscosity of 3,000 mPa·s was used as the adhesive that bonds the inorganic paper together and bonds the coated paper to the inorganic paper layer. Thus, a sample of Example 32 was prepared.

### <Example 33>

An adhesive made of an ethylene-vinyl acetate copolymer and having a kinetic viscosity of 5,000 mPa·s was used as the adhesive that bonds the inorganic paper together and bonds the coated paper to the inorganic paper layer. Thus, a sample of Example 33 was prepared.

### <Example 34>

An adhesive made of an ethylene-vinyl acetate copolymer and having a kinetic viscosity of 7,000 mPa·s was used as the adhesive that bonds the inorganic paper together and bonds the coated paper to the inorganic paper layer. Thus, a sample of Example 34 was prepared.

### <Example 35>

An adhesive made of an ethylene-vinyl acetate copolymer and having a kinetic viscosity of 9,000 mPa·s was used as the adhesive that bonds the inorganic paper together and bonds the coated paper to the inorganic paper layer. Thus, a sample of Example 35 was prepared.

### <Example 36>

An adhesive made of an ethylene-vinyl acetate copolymer and having a kinetic viscosity of 11,000 mPa·s was used as the adhesive that bonds the inorganic paper together and bonds the coated paper to the inorganic paper layer. Thus, a sample of Example 36 was prepared.

### <Example 37>

An adhesive made of an ethylene-vinyl acetate copolymer and having a kinetic viscosity of 13,000 mPa·s was used as the adhesive that bonds the inorganic paper together and bonds the coated paper to the inorganic paper layer. Thus, a sample of Example 37 was prepared.

### <Example 38>

An adhesive made of an ethylene-vinyl acetate copolymer and having a kinetic viscosity of 15,000 mPa·s was used as the adhesive that bonds the inorganic paper together and bonds the coated paper to the inorganic paper layer. Thus, a sample of Example 38 was prepared.

### <Example 39>

An adhesive made of an ethylene-vinyl acetate copolymer and having a kinetic viscosity of 17,000 mPa·s was used as the adhesive that bonds the inorganic paper together and bonds the coated paper to the inorganic paper layer. Thus, a sample of Example 39 was prepared.

### <Example 40>

An adhesive made of an ethylene-vinyl acetate copolymer and having a kinetic viscosity of 18,000 mPa·s was used as the adhesive that bonds the inorganic paper together and bonds the coated paper to the inorganic paper layer. Thus, a sample of Example 40 was prepared.

### <Example 41>

An adhesive made of an ethylene-vinyl acetate copolymer and having a kinetic viscosity of 20,000 mPa·s was used as the adhesive that bonds the inorganic paper together and bonds the coated paper to the inorganic paper layer. Thus, a sample of Example 41 was prepared.

### <Comparative Example 2>

A sample was prepared in which no pattern layer was provided on a surface of the inorganic paper. Other than that, the same materials and configuration as in Example 28 were used to prepare a sample of Comparative example 2.

Table 2 shows the layer configuration of the samples in Examples 28 to 41 and Comparative example 2.

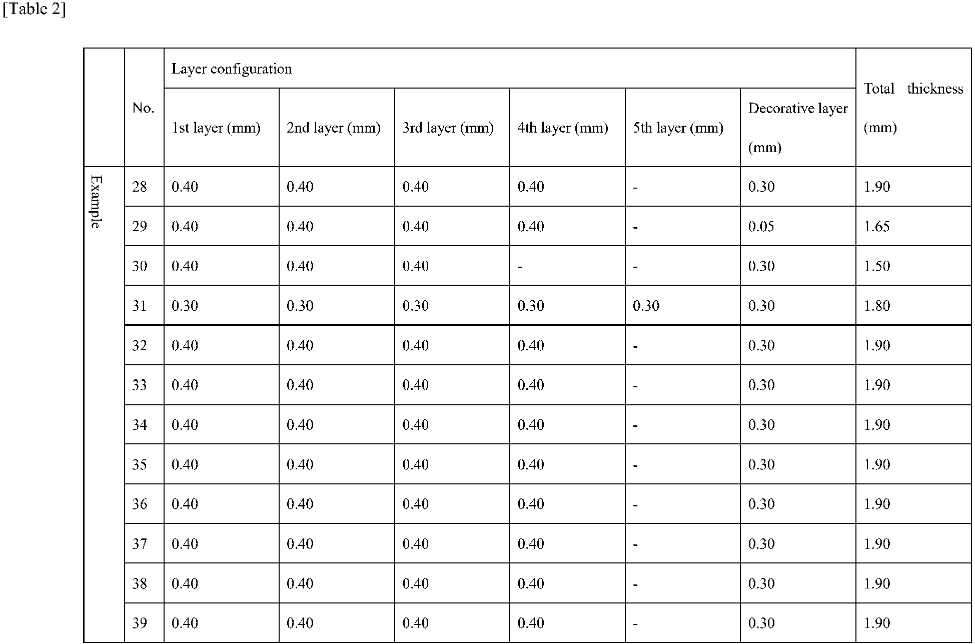

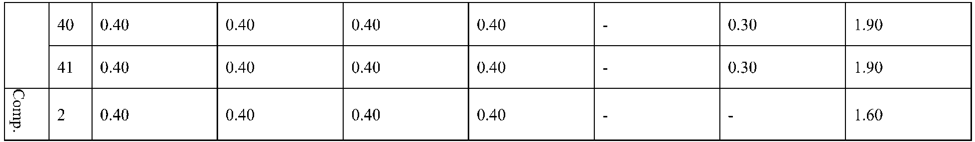

### <Evaluation Criteria and Evaluation Methods>

Samples were prepared in which sheets of inorganic paper were laminated with an adhesive in the configurations described in Examples 1 to 41 and Comparative examples 1 and 2 and formed into a flat shape, and tested and evaluated according to the following evaluation criteria and evaluation methods.

### [Interlayer Adhesion Strength]

To examine the peel strength between inorganic paper layers, a cutter knife was inserted between the inorganic paper layers (adhesive portion) to peel off the layers, and the peeled surface was observed.

The evaluation indicators were as follows.

Good: Peeled inorganic paper was torn, or fragments of other inorganic paper remained on the surface of the peeled inorganic paper.

Fair: Peeled inorganic paper was slightly torn, or fragments of other inorganic paper slightly remained on the surface of the peeled inorganic paper.

Poor: Inorganic paper could be peeled off even by a light force, and fragments of other inorganic paper did not remain on the surface of the peeled inorganic paper.

In this evaluation, "good" and "fair" indicate that the sheets of inorganic paper are strongly bonded together, and are regarded as a pass.

### [Non-Combustibility Test]

For a non-combustibility test, an ignitability test using a cone calorimeter tester was performed in conformity with ISO 5660-1, according to the fire protection and fireproofing test method and the performance evaluation standards based on Paragraph 9 of Article 2 of the Japanese Building Standards Act and Article 108-2 of the Order for Enforcement of the Building Standards Act.

When a total heat value (MJ/m²) within 20 minutes after the start of heating was 8 MJ/m² or less and a maximum heat release rate within 20 minutes after the start of heating did not exceed 200 kW/m² for 10 consecutive seconds, it was regarded as a pass. The absence of cracks and voids in the substrate was also a requirement.

### [Processability]

Since the product is formed into a paper tube shape during production, the processability when formed into a paper tube shape was examined.

In order to check for any abnormalities in the cross-section and shape of the paper tube when adjusting the length of the paper tube at the installation site, the end face of the paper tube was cut and the cross-section was visually inspected to check for any peeling in the adhesive layer between the inorganic paper layers and any deformation of the paper tube due to cutting.

The evaluation indicators were as follows.

Good: No peeling of adhesive or distortion of paper tube occurred when cutting paper tube.

Fair: Slight peeling of adhesive or distortion of paper tube occurred when cutting paper tube.

Poor: Significant peeling of adhesive or distortion of paper tube occurred when cutting paper tube.

In this evaluation, "good" and "fair" are regarded as a pass since there are no problems in use.

### [Design]

The presence or absence of design was examined.

The evaluation indicators were as follows.

Good: Design was ensured.

Fair: Design was not ensured.

In this evaluation, "good" is regarded as a pass.

### [Evaluation Results]

Tables 3 and 4 show the evaluation results of the above tests.

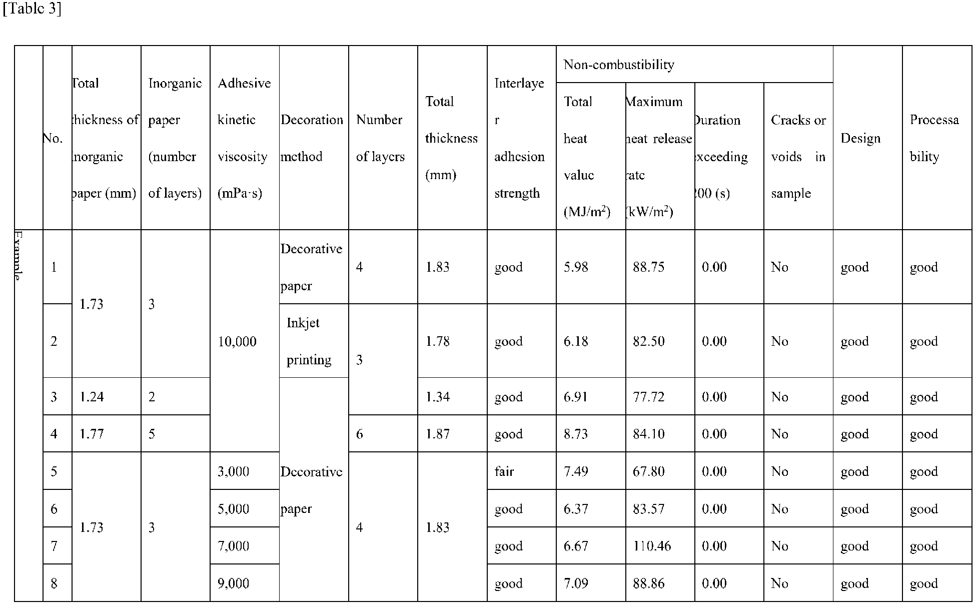

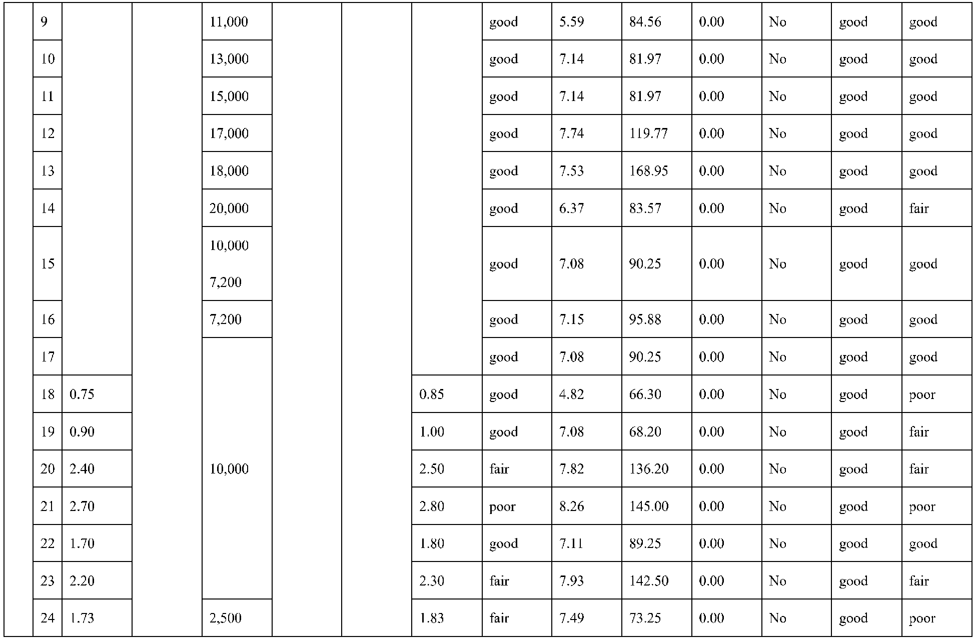

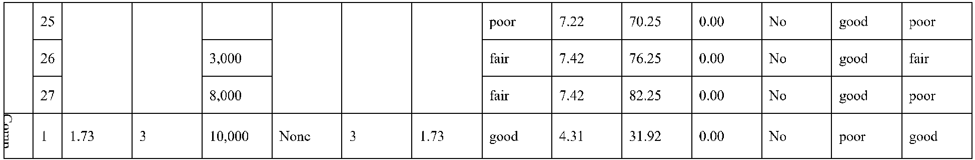

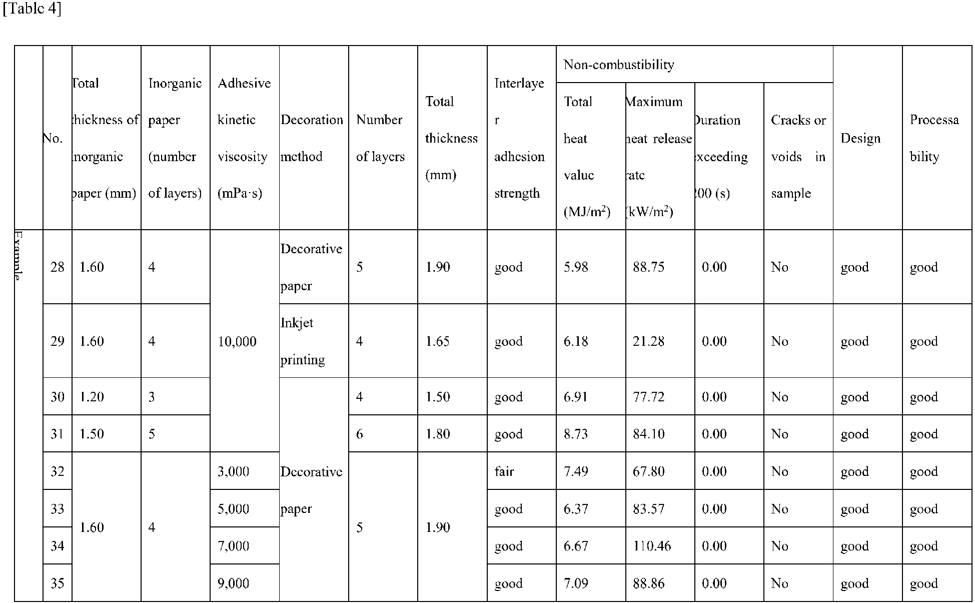

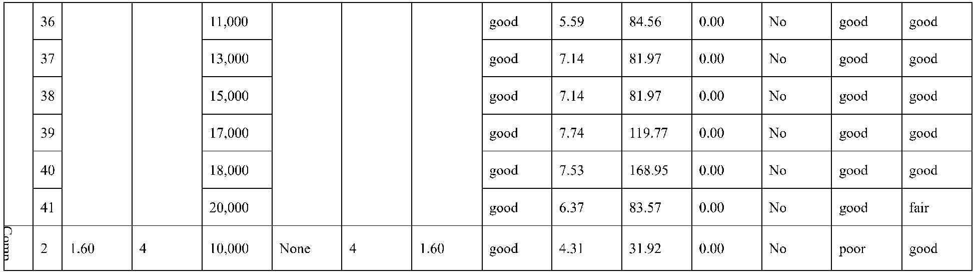

As seen from Tables 3 and 4, design is found to be ensured in all the samples in Examples 1 to 41.

In Example 4, in which 5 layers of thin inorganic paper were laminated, the total heat value (MJ/m²) within 20 minutes after the start of heating exceeded 8 MJ/m², indicating poor combustion resistance. The reason for this seems to be that the amount of heat increased due to an increase in the organic mass contained in the adhesive that bonded the inorganic paper together during lamination.

Therefore, the number of layers is preferably 4 or less in order not to impair the combustion resistance.

In Example 5, in which the kinetic viscosity of the adhesive was 3,000 mPa·s, the interlayer adhesion strength was low and peeling between inorganic paper layers occurred. The reason for this seems to be that the adhesive used had low kinetic viscosity, which caused infiltration into the inorganic paper and reduced adhesion.

Further, in Example 14, in which the kinetic viscosity of the adhesive was 20,000 mPa·s, the adhesive had poor elongation and did not meet the standards for processability. The reason for this seems to be that the adhesive used had high kinetic viscosity and was not spread over the inorganic paper surface to which it was applied, that is, the adhesive was not applied evenly.

Therefore, the kinetic viscosity of the adhesive is preferably 5,000 mPa·s or greater and 18,000 mPa·s or less to improve the interlayer adhesion strength.

Although the embodiment and examples of the present invention have been described above, the paper tube of the present invention is not limited to the above embodiment and examples, and various modifications can be made within the scope where the features of the invention are not impaired.

Further, the present embodiment may have, for example, the following configurations.
(1) A paper tube including a pattern layer on at least one side of an inorganic paper laminate formed of a plurality of layers of inorganic paper bonded together.
(2) The paper tube according to the above (1), wherein an adhesive that bonds the layers of the inorganic paper together contains a thermoplastic elastomer.
(3) The paper tube according to the above (2), wherein the adhesive that bonds the layers of the inorganic paper together contains an ethylene-vinyl acetate copolymer or a polyurethane-based resin.
(4) The paper tube according to any one of the above (1) to (3), wherein the pattern layer is provided by printing an ink layer directly on a surface of the inorganic paper.
(5) The paper tube according to any one of the above (1) to (3), wherein the pattern layer is provided by bonding a decorative sheet or coated paper containing an ink layer to a surface of the inorganic paper.
(6) The paper tube according to the above (5), wherein an adhesive that bonds the inorganic paper to the decorative sheet or coated paper contains a thermoplastic elastomer.
(7) The paper tube according to the above (6), wherein the thermoplastic elastomer is an ethylene-vinyl acetate copolymer or a polyurethane-based resin.
(8) The paper tube according to the above (7), wherein the adhesive is applied in an amount of 10.0 g/m² or greater and 30.0 g/m² or less.
(9) The paper tube according to any one of the above (1) to (8), wherein the inorganic paper has a thickness of 0.30 mm or greater and 0.80 mm or less.
(10) The paper tube according to any one of the above (1) to (9), wherein the inorganic paper has a mass of 250 g/m² or greater and 550 g/m² or less.
(11) The paper tube according to any one of the above (1) to (10), wherein an overall thickness is 1.9 mm or greater and 2.3 mm or less.
(12) The paper tube according to any one of the above (1) to (11), wherein the number of layers in the inorganic paper laminate is 2 or more and 4 or less.
(13) The paper tube according to any one of the above (1) to (12), wherein the paper tube has combustion resistance that satisfies the following requirements in an ignitability test using a cone calorimeter tester in conformity with ISO 5660-1: (i) a total heat value within 20 minutes after the start of heating is 8 MJ/m² or less, (ii) a maximum heat release rate within 20 minutes after the start of heating does not exceed 200 kW/m² for 10 consecutive seconds, and (iii) there are no cracks or voids penetrating from the outside to the inside, which are harmful to fire protection, within 20 minutes after the start of heating.
(14) A laminate for producing a paper tube, the laminate including a pattern layer on at least one side of an inorganic paper laminate formed of a plurality of layers of inorganic paper bonded together.
(15) A method for producing a paper tube, the method including forming a laminate for producing a paper tube, the laminate including a pattern layer on at least one side of an inorganic paper laminate formed of a plurality of layers of inorganic paper bonded together.
(16) The method for producing a paper tube according to the above (15), wherein an adhesive that bonds the layers of the inorganic paper together is an ethylene-vinyl acetate copolymer, and
   the adhesive has a kinetic viscosity of 3,000 mPa·s or greater.
(17) The method for producing a paper tube according to the above (15), wherein an adhesive that bonds the layers of the inorganic paper together is an ethylene-vinyl acetate copolymer, and
   the adhesive has a kinetic viscosity of 5,000 mPa·s or greater and 18,000 mPa·s or less.
(18) The method for producing a paper tube according to the above (15), wherein an adhesive that bonds the layers of the inorganic paper together is a polyurethane-based resin, and
   the adhesive has a kinetic viscosity of 3,000 mPa·s or greater.
(19) The method for producing a paper tube according to the above (15), wherein an adhesive that bonds the layers of the inorganic paper together is a polyurethane-based resin, and
   the adhesive has a kinetic viscosity of 3,000 mPa·s or greater and 7,200 mPa·s or less.

### [Reference Signs List]

- 10: Laminate that constitutes a paper tube (laminate for producing a paper tube)
- 1: Inorganic paper
- 2: Adhesive layer
- 3: Pattern layer
- 3a: Ink layer
- 3b: Substrate

## Claims

1. A paper tube comprising a pattern layer on at least one side of an inorganic paper laminate formed of a plurality of layers of inorganic paper bonded together.

2. The paper tube according to claim 1, wherein
an adhesive that bonds the layers of the inorganic paper together contains a thermoplastic elastomer.

3. The paper tube according to claim 2, wherein
the adhesive that bonds the layers of the inorganic paper together contains an ethylene-vinyl acetate copolymer or a polyurethane-based resin.

4. The paper tube according to claim 3, wherein
the pattern layer is provided by printing an ink layer directly on a surface of the inorganic paper.

5. The paper tube according to claim 3, wherein
the pattern layer is provided by bonding a decorative sheet or coated paper containing an ink layer to a surface of the inorganic paper.

6. The paper tube according to claim 5, wherein
an adhesive that bonds the inorganic paper to the decorative sheet or coated paper contains a thermoplastic elastomer.

7. The paper tube according to claim 6, wherein
the thermoplastic elastomer is an ethylene-vinyl acetate copolymer or a polyurethane-based resin.

8. The paper tube according to claim 7, wherein
the adhesive is applied in an amount of 10.0 g/m² or greater and 30.0 g/m² or less.

9. The paper tube according to claim 8, wherein
the inorganic paper has a thickness of 0.30 mm or greater and 0.80 mm or less.

10. The paper tube according to claim 9, wherein
the inorganic paper has a mass of 250 g/m² or greater and 550 g/m² or less.

11. The paper tube according to claim 10, wherein
an overall thickness is 1.9 mm or greater and 2.3 mm or less.

12. The paper tube according to claim 11, wherein
the number of layers in the inorganic paper laminate is 2 or more and 4 or less.

13. The paper tube according to claim 12, wherein
the paper tube has combustion resistance that satisfies the following requirements in an ignitability test using a cone calorimeter tester in conformity with ISO 5660-1: (i) a total heat value within 20 minutes after the start of heating is 8 MJ/m² or less, (ii) a maximum heat release rate within 20 minutes after the start of heating does not exceed 200 kW/m² for 10 consecutive seconds, and (iii) there are no cracks or voids penetrating from the outside to the inside, which are harmful to fire protection, within 20 minutes after the start of heating.

14. A laminate for producing a paper tube, the laminate comprising a pattern layer on at least one side of an inorganic paper laminate formed of a plurality of layers of inorganic paper bonded together.

15. A method for producing a paper tube, the method comprising forming a laminate for producing a paper tube, the laminate comprising a pattern layer on at least one side of an inorganic paper laminate formed of a plurality of layers of inorganic paper bonded together.

16. The method for producing a paper tube according to claim 15, wherein
an adhesive that bonds the layers of the inorganic paper together is an ethylene-vinyl acetate copolymer, and
the adhesive has a kinetic viscosity of 3,000 mPa·s or greater.

17. The method for producing a paper tube according to claim 15, wherein
an adhesive that bonds the layers of the inorganic paper together is an ethylene-vinyl acetate copolymer, and
the adhesive has a kinetic viscosity of 5,000 mPa·s or greater and 18,000 mPa·s or less.

18. The method for producing a paper tube according to claim 15, wherein
an adhesive that bonds the layers of the inorganic paper together is a polyurethane-based resin, and
the adhesive has a kinetic viscosity of 3,000 mPa·s or greater.

19. The method for producing a paper tube according to claim 15, wherein
an adhesive that bonds the layers of the inorganic paper together is a polyurethane-based resin, and
the adhesive has a kinetic viscosity of 3,000 mPa·s or greater and 7,200 mPa·s or less.
